# EUROPÄISCHE PATENTSCHRIFT

(11) **EP 3 759 176 B1**
(45) Veröffentlichungstag und Bekanntmachung des Hinweises auf die Patenterteilung: **13.07.2022**
(21) Anmeldenummer: 19707125.1
(22) Anmeldetag: 11.02.2019
(51) Int. Cl.: C09D 5/00

(54) **VERFAHREN ZUR HERSTELLUNG EINER BESCHICHTUNG**
METHOD FOR PRODUCING A COATING
PROCÉDÉ DE FABRICATION D'UN REVÊTEMENT

(30) Priorität: 28.02.2018 CH 2382018
(43) Veröffentlichungstag der Anmeldung: 06.01.2021
(73) Patentinhaber: Battrion AG, 6003 Luzern (CH); Hilti Aktiengesellschaft, 9494 Schaan (LI)
(72) Erfinder: KORY, Max, 8006 Zürich (CH)
(74) Vertreter: Frommhold, Joachim
(86) Internationale Anmeldenummer: PCT/IB2019/051071
(87) Internationale Veröffentlichungsnummer: WO 2019/166899

(56) Entgegenhaltungen:
- EP-A1- 2 009 044
- WO-A1-2009/126442
- WO-A1-2014/097309
- JP-A- 2012 251 171

## Beschreibung

Die Erfindung betrifft ein Verfahren zur Herstellung einer Beschichtung, die insbesondere zur Herstellung von Elektroden, und weiter insbesondere für die Herstellung von Elektroden zur Verwendung in Lithium-Ionen Batterien anwendbar ist.

Für die Herstellung von Batterieelektroden finden Pasten insbesondere Pasten bestehend aus kohlenstoffbasierten Materialien, insbesondere Graphit oder Pasten, die insbesondere Metalloxidpartikel enthalten, Anwendung.

Für die Herstellung der negativen Elektrode wird dabei eine wässrige Suspension von Graphitpartikel mit Carboxymethylcellulose (CMC) angerührt und anschliessend ein Stryrol-Butadiene-Kautschuk Latex-Binder (SBR-Binder) hinzugefügt. Die CMC hat dabei zwei Aufgaben. Einerseits sorgt es als Oberflächenmodifizierer dafür, dass die Graphitpartikel im Wasser gut dispergiert werden können und andererseits fungiert sie als Rheologie-Modifizierer. In dieser zweiten Rolle sorgen die CMC-Ketten dafür, dass die entstehende Suspension eine stabile viskose Paste bildet, die wenig Sedimentation aufweist und gleichzeitig bei hohen Scherraten dünnflüssig genug ist, um ein blasenfreies Auftragen auf eine Trägerfolie mittels einer Schlitzdüse zu gewährleisten.

Der SBR-Binder sorgt dafür, dass die aufgetragene Beschichtung auf der Trägerfolie haftet und die Beschichtung genügend Elastizität aufweist.

Je nach Form der Graphitpartikel, die dabei Verwendung findet, können verschiedene Feststoffgehalte in der Paste erreicht werden. Mit sphärischen Partikeln lässt sich für gewöhnlich ein höherer Feststoffgehalt erzielen. Allgemein ist ein hoher Feststoffanteil von Interesse, da auf diese Weise schneller und energieeffizienter getrocknet werden kann.

Um die Lade- und Entladegeschwindigkeit einer Lithium-Ionen Batterie zu erhöhen, können die Graphitpartikel bei der Herstellung einer negativen Elektrode ausgerichtet werden. Dabei wird zuerst eine Adhäsionsschicht auf den Folienträger (Kupferfolie) aufgetragen und anschliessend, die Graphitpartikel in der Paste vertikal zum Folienträger ausgerichtet. Eine anschliessende Trocknung führt zu einer negativen Elektrode mit vertikal ausgerichteten Graphitpartikeln.

Bei der herkömmlichen Herstellung von negativen Elektroden für den Gebrauch in Lithium-Batterien kommt es bei der Trocknung der Nassbeschichtungen zu einer unerwünschten Migration des SBR-Binders. Vor allem wenn die aufgetragene Paste schnell getrocknet wird, d.h. unter hohen Temperaturen und bei starkem Luftstrom, bewegen sich die SBR-Binder-Partikel an die Oberfläche der Beschichtung (Langmuir, 2013, 29 (26), pp 8233-8244). Dieser Prozess kann aufgrund von Konvektion des Lösungsmittels, in diesem Fall Wasser, stattfinden. In der fertig getrockneten Elektrode kommt es dadurch zu einem Mangel des SBR-Binders an der Grenzschicht zwischen Kupferfolie und Graphitbeschichtung. Dies kann zu einer schlechten Adhäsion der Beschichtung auf dem Folienträger führen. Das kann die elektrochemische Leistungsfähigkeit einer daraus hergestellten Lithium-Ionen-Batterie negativ beeinträchtigen. Um die Bindermigration in Nassbeschichtungen zu vermeiden, wendet die Industrie daher zumeist milde Trocknungsbedingen mit geringen Temperaturen und geringem Luftstrom an. Dies führt jedoch zu einer unerwünschten Verlangsamung des Elektrodenherstellungsprozesses.

Manche Pasten, die für Beschichtungen verwendet werden sollen, enthalten nichtsphärische Partikel. Pasten, die anistrope Partikelformen enthalten, erreichen häufig nur geringe Feststoffgehalte. Ein Beispiel hierzu stellen Pasten mit blättchenförmigen Partikeln, wie beispielsweise nicht verrundeter, blättchenförmiger Graphit, dar. Bei diesen Pasten kann der geringe Feststoffgehalt dazu führen, dass es bei der Trocknung zu einer ausgeprägten Konvektion kommt, die Partikel innerhalb der Beschichtung wegtransportieren kann. Dieser Prozess kann zu inhomogenen Flächengewichten der Beschichtung führen. Des Weiteren kann der Trocknungsprozess bei niedrigen Flächengewichten auch zu Rissen in der Beschichtung führen. Die Herstellung von schnell ladenden und entladenen Lithium-Ionen Batterien mit vertikal (d.h. senkrecht zur Stromabnehmerfolie) ausgerichteten, blättchenförmigen Graphitpartikeln stellt in diesem Kontext eine besondere Herausforderung dar. Die Pasten, die für diesen Zweck verwendet werden, enthalten aufgrund der Blättchenform der Partikel häufig einen geringen Feststoffgehalt. Die vertikale Ausrichtung der Graphitpartikel begünstigt darüber hinaus die Ausbildung von Rissen. Des Weiteren kann die die vertikale Ausrichtung der Partikel zu einerstärkeren Konvektion während der Trocknung führen underhöht damit die Bindermigration was zu einer schlechten Adhäsion der Beschichtung auf dem Folienträger führen kann. Eine starke Konvektion kann auch dazu führen, dass die vertikale Ausrichtung der Graphitpartikel während der Trocknung verloren geht. Auch kann ein starker Luftstrom des Trockners dazu führen, dass die vertikale Ausrichtung der Partikel beeinträchtigt wird.

Ein weiteres Problem bei der Herstellung von negativen Elektroden für die Verwendung in Lithium-Batterien sind unregelmässige Flächengewichte in Kantennähe der Beschichtungen, speziell bei intermittierenden Beschichtungen.

Unregelmässige Flächengewichte können zur unerwünschten Abscheidung von Lithium auf den Elektroden (im Gegensatz zur erwünschten Interkalation in die Elektrodenpartikel) führen, vor allem dort wo die Flächengewichte nicht ausreichend hoch sind. Aufgrund der Abscheidung kann es zu einer verkürzten Lebensdauer unddendritischem Wachstum des abgeschiedenen Lithiums kommen, was zu einem Kurzschluss der Batterie mit gefährlichen Folgen führen kann.

Um dieses Problem zu lösen werden Beschichtungskanten, die bei der Elektrodenherstellung entstehen, häufig abgeschnitten, mit Kaptonklebeband abgeklebt oder nachträglich durch Abtragung verbessert. Dies ist umständlich und bedeutet zusätzliche Mehrkosten bei der Elektrodenherstellung.

Die WO 2014097309 A1 offenbart eine Beschichtung zur Entfeuchtung von Mauerwerk, die in Abhängigkeit von Temperatur oder Feuchte reagiert. Sie enthält ein Fungizid oder Algizid, jedoch keine thermoresponsive Komponente.

Die EP 02009044 A1 offenbart wässrige Polymerlösungen und Dispersionen von Partikeln in dieser Lösung. Dabei soll thermoresponsives Material, hier Biomoleküle und Mikroorganismen bis zu einer oberen Lösungstemperatur lagerfähig sein. Eine ähnliche Lösung ist in der JP 2012251171 offenbart.

In der WO 2009126442 A1 sind Hydrogele mit Nanopartikeln in Form von Therapeutika offenbart.

Der Erfindung liegt die Aufgabe zugrunde, ein einfaches Verfahren zur Herstellung einer Beschichtung oder Schicht zu entwickeln, das insbesondere zur Herstellung von Elektroden, und weiter insbesondere für die Herstellung von Elektroden zur Verwendung in Lithium-Ionen Batterien anwendbar ist.

Die Aufgabe ist mit den Merkmalen des Patentanspruchs 1 gelöst.

Erfindungsgemäss wird zur Herstellung einer Beschichtung aus einer thermoresponsiven Paste, die Feststoffpartikel und eine thermoresponsive Komponente enthält, die Beschichtung bzw. Schicht auf einen Träger aufgetragen, verfestigt und getrocknet. Hierbei wird der Beschichtung während des Verfestigens mindestens 0.001% und weniger als 80% einer flüchtigen Komponente entzogen. Die flüchtige Komponente in der die Feststoffpartikel suspendiert werden, ist ein Lösemittel, zum Beispiel Wasser.

Vorteilhafte Ausgestaltungen der Erfindung sind in den abhängigen Ansprüchen offenbart.

Weitere Teilaufgaben der Erfindung bestehen darin, ein verfestigendes Additiv zu entwickeln, das einer Paste zugeführt werden kann, um dieser verfestigende Eigenschaften zu verleihen. Weiterhin soll eine Pastenrezeptur und ihre Herstellung, insbesondere zur Verwendung für die Herstellung von Lithium-Ionen Batterien entwickelt werden.

Zusätzlich soll eine Elektrode entwickelt werden, die unter der Zuhilfenahme dieser Paste hergestellt wird

Das erfindungsgemässe Verfahren ermöglicht es, eine konventionelle Paste zu einer thermoresponsiven Paste zu transformieren, mit der sich bessere Beschichtungen erzielen lassen. Dies kann erfindungsgemäss durch die Zugabe des thermoresponsiven Additivs zu einer konventionell hergestellten Paste, d.h. zu einer Paste, die keine verfestigende Komponente enthält, erreicht werden.

Die Erfindung ermöglicht ein schnelleres Trocknen von Beschichtungen, die Festoffpartikel enthalten, da es aufgrund der verfestigenden/thermoresponsiven Eigenschaften der Paste eine Bindermigration unterdrückt.

Ausserdem ermöglicht die Erfindung aufgrund der verfestigenden Eigenschaften homogene Flächengewichte auch bei Beschichtungen aus Pasten, die einen geringen Feststoffanteil enthalten.

Des Weiteren erlaubt die Erfindung aufgrund der verfestigenden Eigenschaften eine Fixierung von ausgerichteten Partikeln und verhindert auf diese Weise, dass die Orientierung der Partikel während des Trocknungsvorgangs beeinträchtigt wird. Zusätzlich verbessert die hier beschriebene Erfindung aufgrund der verfestigenden Eigenschaften die Homogenität der Flächengewichte in Kantennähe der Beschichtung

Die Erfindung wird nachfolgend in mehreren Ausführungsbeispielen anhand einer Zeichnung beschrieben. In der Zeichnung zeigen die
Fig. 1: einen Temperatur-Viskositäts-Graph und
Fig. 2: den Aufbau einer Vorrichtung zur Verfestigung einer Paste.

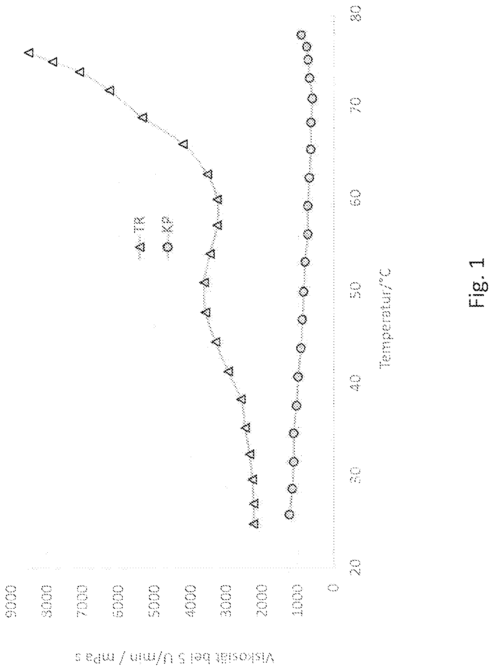

Die Fig. 1 zeigt eine Grafik, die den Temperatur-Viskositätszusammenhang bei einer konventionellen Paste KP und der einer thermoresponsive Paste TR darstellt. Gemessen wurde die Viskosität der jeweiligen Paste mit einem Brookfield-Rheometer (Spindelgrösse 4, 5 U/min). Während die konventionelle Paste KP mit steigender Temperatur dünnflüssiger wird, nimmt für die thermoresponsive Paste TR die Viskosität zu.

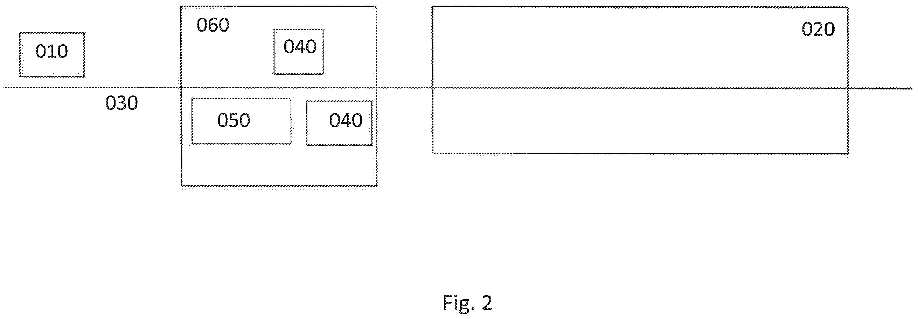

Während einer Trocknungsphase von Beschichtungen mit Pasten, die Feststoffpartikel enthalten, kommt es zu einer Konvektion innerhalb der Beschichtung. Durch diesen Strömungstransport, der besonders stark bei schnellen Trocknungsvorgängen erfolgt, d. h. hohe Temperaturen und hoher Luftstrom, können Partikel von SBR-Bindern an die Beschichtungsoberfläche transportiert werden. Dieser Prozess kann aufgrund der Konvektion des Lösungsmittels, in diesem Fall Wasser, stattfinden. In der fertig getrockneten Elektrode kommt es dadurch zu einem Mangel an SBR-Binder an der Grenzschicht zwischen Kupferfolie und Graphitbeschichtung. Dies kann zu einer schlechten Adhäsion der Beschichtung auf dem Folienträger 030 (Fig. 2) führen, was die elektrochemische Leistungsfähigkeit einer daraus hergestellten Lithium-Ionen-Batterie negativ beeinträchtigen kann.

Mittels der Erfindung kann dieses Problem durch den Einsatz einer verfestigenden/gelierenden Komponente, wie beispielsweise einer thermoresponsiven Komponente, die in der zu beschichteten Paste enthalten ist, gelöst werden. Diese Komponente, beispielsweise Methylcellulose, führt unter der Einwirkung von Wärme dazu, dass sich die aufgetragene feuchte Beschichtung/Schicht verfestigt, ohne gleichzeitig die flüchtige Komponente zu entfernen. Dabei spielt die LCST (Lower Critical Solution Temperature), die untere kritische Lösungstemperatur eine wichtige Rolle. Eine LCST wird häufig beobachtet, wenn Polymere wie beispielsweise Methylcellulose, Hydroxypropylcellulose, die substituierte und unsubstituierte Anhydroglucose Ringe enthalten, oder auch Polymere wie Poly(N-isopropylacrylamide) Bestandteile der Mischungen sind. Dabei kann ein Übergang der Polymerketten von einer offenkettigen Knäuel-Konformation zu einer kompakten Konformation beobachtet werden. Oberhalb der LCST besteht eine Mischungslücke, die zur Verfestigung der Beschichtung/Schicht führen kann. Die benötigte Wärmeeinwirkung um oberhalb der LCST zu kommen, kann dabei beispielsweise durch Heizelemente 040 (Fig. 2), wie beispielsweise beheizte Gebläse, beheizte Rollen, IR-Heizstrahler, Heiz-LEDs, Mikrowellenvorrichtungen, Induktionsheizeinrichtungen oder Kombinationen daraus erfolgen. Im Beispiel ist je ein Heizelement 040 oberhalb und unterhalb des Folienträgers 030 angeordnet.

Auch kleine Massenanteile der thermoresponsiven Komponente, wie beispielsweise 0.25wt% in der zu beschichtenden Schicht (entspricht 0.5wt% in der resultierenden trockenen Beschichtung bei einem Feststoffgehalt von 50wt% der zu beschichtenden Schicht), reichen aus um zur Verfestigung der Paste bei Temperaturerhöhung oberhalb der LCST herbeizuführen.

Die erhöhte Viskosität in der Beschichtung führt dazu, dass der Strömungstransport der SBR-Binderpartikel während der Trocknung verringert wird. Auf diese Weise kommt es nicht zu einer Konzentrationsabnahme der SBR-Binder Partikel an der Grenzfläche zur Beschichtungsträgerfolie. Dies führt zu einer guten Adhäsion der Beschichtung auch bei schneller Trocknung (hohe Temperaturen, starker Luftstrom). Dies bedeutet eine Beschleunigung des Elektrodenherstellungsprozesses gegenüber dem konventionellen Trocknen unter milden Bedingungen.

Ein weiteres Problem stellen Beschichtungen aus Pasten mit niedrigem Feststoffanteil dar, da es hier ebenfalls zu starken Transportströmen während der Trocknungsphase kommt. Die starken Transportströme können dabei zu eineminhomogenen Flächengewicht der Beschichtung führen (siehe Tabelle 1, Elektrodentype 3). Durch den Einsatz einer verfestigenden/gelierenden Komponente, wie beispielsweise einer thermoresponsiven Komponente, die in der zu beschichteten Paste enthalten ist, werden die Transportströme verringert.

**Tabelle 1:**

| Elektrode | Pastentyp zur Herstellung einer Elektrode | Standartabweichung des Flächengewichts (ermittelt aus 3 Proben) (%) | Porosität (%) | Dichte (g/cm³) |
|---|---|---|---|---|
| 1 | Konventionelle Paste mit blättchenförmigem Graphit (Feststoffanteil: 47 wt%) | 1.5 | 57 | 0.98 |
| 2 | thermoresponsive Paste mit blättchenförmigem Graphit (Feststoffanteil: 47 wt%) | 2.0 | 60 | 0.89 |
| 3 | konventionelle Paste mit natürlichem blättchenförmigen Graphit (Feststoffanteil:36 wt%) | 14.7 | 61 | 0.87 |
| 4 | thermoresponsive Paste mit natürlichem blättchenförmigen Graphit (Feststoffanteil : 36 wt%) | 1.6 | 70 | 0.67 |

Die Tabelle 1 zeigt den Einfluss, den die thermoresponsive Komponente A in der Paste auf die Porosität und Homogenität einer daraus hergestellten Elektrode hat. Dazu wurden drei Proben aus der Elektrode gestanzt und in Bezug auf Flächengewicht und Dicke charakterisiert. Elektroden, die aus einer thermoresponsiven Paste hergestellt wurden, weisen höhere Porositäten/niedrigere Dichten auf. Elektroden, die mit thermoresponsiven Pasten TR mit niedrigen Feststoffanteil hergestellt wurden, zeigen homogenere Flächengewichte als Elektroden, die mit konventionellen Pasten KP mit niedrigem Feststoffanteil hergestellt wurden.

Die erhöhten Porositäten und die homogenen Flächengewichte der Elektroden, die mit thermoresponsiven Pasten TR hergestellt wurden zeigen, dass die in der Paste enthaltenen Partikel durch die thermoresponsive Komponente A fixiert werden.

Der Einsatz verfestigender Pasten bewirkt auch Vorteile bei Beschichtungen mit ausgerichteten Partikeln. Der Trocknungsprozess, der nach einer Ausrichtung der Partikel in einem Feld stattfindet, kann dabei dazu führen, dass die ausgerichteten Partikel ihre Orientierung ungewollt verändern. Speziell die Lufttrocknung im Ofen durch Gebläse kann einen signifikanten Einfluss auf die Orientierung der ausgerichteten Partikel haben, insbesondere kann die vertikale Ausrichtung von Graphitpartikeln, die durch ein magnetisches Feld (Magnetfeldeinrichtung 050) erzielt wurde, während der Trocknung im Trockner 020 beeinträchtigt werden. Der Verlust der Ausrichtung der Graphitpartikel wiederum kann die elektrochemische Leistungsfähigkeit der Elektrode beim Laden und Entladen einschränken. Die Verwendung einer verfestigenden Komponente kann die Beeinträchtigung der Orientierung von ausgerichteten Partikeln vermeiden.

Im Fall von Graphitpartikeln kann durch das Verfestigen der feuchten Beschichtung die Ausrichtung, die vorgängig im Magnetfeld erreicht wurde, längerfristig erhalten bleiben. Dies erlaubt die Trocknung, die im Anschluss stattfindet, ohne Anwendung eines Magnetfelds durchzuführen, da eine Bewegung innerhalb der Beschichtung, z. B. durch Konvektion, unterdrückt wird und die Bestandteile, ihre Ausrichtung nicht ändern können.

Durch die Verwendungen eines verfestigenden Additivs, beispielsweise eines thermoresponsiven Additivs, das beispielsweise Methylcellulose und zusätzlich einen silikonbasierten Entschäumer B enthalten kann, lassen sich auch konventionell hergestellte Paste durch einfaches Zumischen in eine thermoresponsive Paste verwandeln. Auf diese Weise können Verbesserungen der Elektrodeneigenschaften auch ohne aufwendige Anpassungen erzielt werden. Durch die Zugabe des thermoresponsiven Additivs zu einer Paste, kann es zu einer Verdickung der Paste beim Verrühren kommen. Dabei hat sich gezeigt, dass die Reihenfolge der Zugabe des Additivs eine wichtige Rolle spielt. Wird das thermoresponsive Additiv, nach der Zugabe des SBR-Binders hinzugefügt, lässt sich ein Verfestigen der Paste beim Verrühren minimieren.

Durch die Verwendung von thermoresponsiven Komponenten A wie beispielsweise Methylcellulose kann es zu Lufteinschlüssen (Blasen und Schaumbildung) kommen. Pasten, die eine solche thermoresponsive Komponente enthalten können deshalb ebenfalls eine Tendenz zur Eilagerung von Lufteinschlüssen aufweisen. Bei Beschichtungen kann es durch solche Lufteinschlüsse zu Defekten kommen. Diese gilt es zu vermeiden. Durch die Zugabe eines Entschäumers B, beispielsweise durch einen silikonbasierten Entschäumer B lassen sich Lufteinschlüsse effizient vermeiden. Da der Zusatz eines Entschäumers B auch zu Defekten in der Beschichtung führen kann, ist die Konzentration und Art des Entschäumers B von Bedeutung. Dabei gilt es die Menge an zugefügtem Entschäumer B möglichst gering zu halten.

Ein weiterer Aspekt der Erfindung betrifft das Zumischen einer weiteren Feststoffpartikelsorte zusätzlich zu dem als Hauptbestandteil vorliegenden Aktivmaterial in der thermoresponsiven Paste. Speziell im Fall, in dem sich die Partikelgrössen der Festsoffmaterialien unterscheiden lassen sich in diesem Fall höhere Feststoffkonzentrationen erreichen. Dies ist besonders hilfreich, wenn blättchenförmger Graphit als Aktivmaterial zum Einsatz kommt, da durch Zufügen einer weiteren Feststoffpartikelsorte, weniger Wasser in der Paste zum Einsatz kommt, was die Trocknung beschleunigt und auch im Fall von ausgerichtetem Graphit zu einer besseren Ausrichtung der Graphitpartikel in der trockenen Elektrode führen kann. Mögliche weitere Feststoffpartikel können dabei eine weitere Graphitpartikelart, Aluminiumoxidpartikel, Siliciumpartikel, Siliciumoxidpartikel oder ähnliche Feststoffpartikel sein.

Ein weiterer Aspekt der Erfindung betrifft eine Vorrichtung zur Verfestigung von thermoresponsiven Pasten TR resp. Schichten. Eine Pastenverfestigungseinrichtung 060 befindet sich dabei zwischen einer Beschichtungsdüse 010 und dem Trockner 020. Aufgabe der Pastenverfestigungseinrichtung 060 ist es, die feuchte und flüssige Beschichtung, die eine verfestigende Komponente, wie beispielsweise eine thermoresponsive Komponente enthält,auf dem Folienträger 030 zu verfestigen, so dass die Beschichtung in einem verfestigten/gelierten Zustand in den Trockner 020 zum anschliessenden Trocknen gelangt. Die Pastenverfestigungseinrichtung 060 enthält dabei Heizelemente 040, wie beispielsweise beheizte Gebläse, beheizte Rollen, IR-Heizstrahler, Vorrichtungen zur Emittierung von Mikrowellen, Induktionsheizgeräte oder Kombinationen davon. Für die Ausrichtung von Partikel in der zu verfestigenden Paste, kann die Pastenverfestigungseinrichtung 060 darüber hinaus auch eine Magnetfeldeinrichtung 050 enthalten. Diese Magnetfeldeinrichtung 050 sorgt für die Ausrichtung der Partikel in der noch feuchten und flüssigen Beschichtung. Die Heizelemente 040 sorgen anschliessend für die Fixierung der ausgerichteten Partikel in der thermoresponsiven Paste TR. Durch die anschliessende Trocknung im Trockner 020 kann auf diese Weise eine trockene Beschichtung mit ausgerichteten Partikeln erhalten werden.

Verbesserungen der Elektrodeneigenschaften mit einer thermoresponsiven Paste TR (bessere Adhäsion, homogeneres Flächengewichte, bessere Ausrichtung im Falle von orientierten Partikeln) lassen sich teilweise auch nur durch die Wärmezufuhr aus einem Trockner 020, d.h. ohne die hier beschriebenePastenverfestigungseinrichtung060 erzielen. Auf diese Weise kann jedoch die Verfestigung der thermoresponsiven Paste TP und ihre Trocknung nur schwer voneinander trennbar sein. Dadurch kann es zu Mischeffekten (Bindermigration tritt teilweise auf, teilweiser Verlust der Orientierung von Partikeln, etc.) kommen.

Die vorgenannten und in den Ausführungsbeispielen beschriebenen, erfindungsgemäss zu verwendenden Vorrichtungen unterliegen in ihrer Grösse, Form, Gestaltung, Materialauswahl und technischen Konzeptionen keinen besonderen Ausnahmebedingungen, sodass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus der Beschreibung der Fig. 2, in der beispielhaft bevorzugte Ausführungsformen der Erfindung dargestellt sind. Die der Beschreibung und den Zeichnungen zu entnehmenden Merkmale können einzeln für sich oder zu mehreren in beliebiger Kombination erfindungsgemäss angewandt werden.

### Beispiele:

Herstellung des thermoresponsiven Additivs:
1.2 g eines Organo-modifizierten Silikon Copolymer-Entschäumers werden mit 75 g einer filtrierten 2 wt%-Methylcellulose Lösung in einem Planeten Zentrifugal Mischer bei 2000 U/minfür 10 min vermischt. Anschliessend werden allfällige eingeschlossene Luftblasen durch das Entschäumerprogramm des Mischers entfernt.

Herstellung einer thermoresponsiven Paste TP:
97 g blättchenförmiger Graphit wird mit 42.5 g Carboxymethylcellulose (CMC) Lösung (2 wt%) und 30.67 g de-ionisiertem Wasser in einem Planeten-Zentrifugal-Mischer bei 1200 U/min für 6 min geknetet. Um eine gute Durchmischung zu erreichen wird zwischen durch von Hand umgerührt. Anschliessend werden 8.53 g deionisiertes Wasser der Mischung zugefügt und ein weiteres Mal bei 1200 U/min für 1.5min gerührt. Dieser Mischung werden 5g eines SBR-Latex-Binders (Feststoffanteil 40wt%) beigemischt. Als letzter Schritt werden 17.5 g des thermoresponsiven Additivs (1.6 wt%-Entschäumer-Methylcellulose-Mischung) der Mischung hinzugegeben und von Hand verführt.

Herstellung einer thermoresponsiven Paste TP mit zwei verschiedenen Feststoffhauptanteilen:
73g blättchenförmiger Graphit wird mit 73g abgerundetem Graphit vermischt und anschliessend 60g Carboxymethylcellulose (CMC) Lösung (2 wt%) und 57 g deionisiertem Wasser in einem Planeten-Zentrifugal- Mischer bei 1200 U/min für 6 min geknetet. Um eine gute Durchmischung zu erreichen wird zwischen durch von Hand umgerührt. Anschliessend werden 63 g deionisiertes Wasser der Mischung zugefügt und ein weiteres Mal bei 1200 U/min für 1.5 min gerührt. Dieser Mischung werden 5 g eines SBR-Latex-Binders (Feststoffanteil 40 wt%) beigemischt. Als letzter Schritt werden 15 g des thermoresponsiven Additivs (2 wt%-Entschäumer-Methylcellulose-Mischung) der Mischung hinzugegeben und von Hand verführt.

Herstellung einer thermoresponsiven Paste TR aus einer konventionellen Paste KP:
Zu einer konventionellen Paste, bestehend aus 97 g blättchenförmigem Graphit, 50 g Carboxymethylcellulose (CMC) Lösung (2 wt%) und 55 g deionisiertem Wasser und 5 g eines SBR-Latex (40 wt%) werden 17.5 g des thermoresponsiven Additivs (1.6%-Entschäumer-Methylcellulose-Mischung) der Mischung hinzugegeben und von Hand verführt.

Herstellung einer Elektrode aus der thermoresponsiven Paste TR:
Die erhaltene Graphitpaste wird als flüssiger Film mit einer Rakel auf eine Stromaufnehmerfolie (Kupferfolie 15µm) aufgetragen. IR-Heizstrahler führen zur Verfestigung der aufgetragenen Beschichtung. Die anschliessende Trocknung ergibt eine poröse Elektrode.

Herstellung einer vertikal ausgerichteten Elektrode aus der thermoresponsiven Paste TR:
Die erhaltene Graphitpaste wird als flüssiger Film mit einer Rakel auf eine Stromaufnehmerfolie (Kupferfolie 15 µm) aufgetragen. Durch ein magnetisches Feld werden die Graphitpartikel vertikal ausgerichtet. IR-Heizstrahler führen zur Verfestigung der aufgetragenen Beschichtung. Dadurch werden die vertikal ausgerichteten Partikel fixiert. Die anschliessende Trocknung ergibt eine poröse Elektrode mit vertikal ausgerichteten Graphitpartikeln.

Eine negative Elektrode mit vertikal ausgerichteten Graphitpartikeln, hergestellt mit einer thermoresponsiven Paste TR kann zusammen mit einer Kathode, einem Separator und einem organischen Elektrolyt zu einer Lithium-Ionen Batterie verbaut werden.

### Liste der Bezugszeichen

- 010: Beschichtungsdüse
- 020: Trockner
- 030: Folienträger
- 040: Heizelement
- 050: Magnetfeldeinrichtung
- 060: Pastenverfestigungsanlage
- A: thermoresponsiveKomponente
- B: Entschäumer
- KP: konventionelle Paste
- TR: thermoresponsive Paste

## Patentansprüche

1. Verfahren zur Herstellung einer Beschichtung aus einer thermoresponsiven Paste, die Feststoffpartikel und eine thermoresponsive Komponente enthält und dass die Beschichtung bzw. Schicht auf einen Träger einer aus der Paste herzustellenden Elektrode aufgetragen, verfestigt und getrocknet wird, **dadurch gekennzeichnet, dass** der Beschichtung während des Verfestigens weniger als 80% einer flüchtigen Lösungsmittelkomponente entzogen wird.

2. Verfahren nach Anspruch 1, **dadurch gekennzeichnet, dass** die Paste magnetisch beeinflussbare Komponenten, insbesondere magnetisch beeinflussbare Partikel, bevorzugt magnetisch beeinflussbare Kohlenstoffpartikel und besonders bevorzugt magnetisch beeinflussbare Graphitpartikel enthält.

3. Verfahren nach Anspruch 1 oder 2, **dadurch gekennzeichnet, dass** die Paste zur Schichtbildung auf ein Bauelement aufgetragen, verfestigt und getrocknet wird.

4. Verfahren zur Herstellung einer thermoresponsiven Paste (TR) nach Anspruch 1, **dadurch gekennzeichnet, dass** der Paste nach einer Zugabe eines SBR-Binders ein Additiv zugegeben wird, das eine thermoresponsive Komponente enthält.

5. Vorrichtung zur Verfestigung einer Beschichtung, die eine thermoresponsive Komponente enthält, in einem kontinuierlichen Prozess gemäss einem Verfahren nach einem der Ansprüche 1 bis 4, wobei die Vorrichtung eine Beschichtungsdüse (010) aufweist, **dadurch gekennzeichnet, dass** sie eine Pastenverfestigungseinrichtung (060) mit mindestens einem Heizelement (040) und einer Magnetfeldeinrichtung (050) umfasst, die der Beschichtungsdüse (010) nachgeordnet und einem Trockner (020) vorangehend angeordnet ist.

6. Vorrichtung nach Anspruch 5, **dadurch gekennzeichnet, dass** das Heizelement (040) ein beheizbares Gebläse, beheizbare Rollen, IR-Heizstrahler,Heiz-LEDs, Induktionsheizer, Vorrichtungen zur Emittierung von Mikrowellen oder Kombinationen davon aufweist.

7. Verfahren nach Anspruch 4, **dadurch gekennzeichnet, dass** das Additiv eine thermoresponsive Komponente (A) enthält oder dass es eine thermoresponsive Komponente (A) und einen Entschäumer (B) enthält.

8. Verfahren nach Anspruch 7, **dadurch gekennzeichnet, dass** die thermoresponsive Komponente (A) substituierte und/ oder unsubstituierte Anhydroglucoseringe enthält.

9. Verfahren nach Anspruch 7 und 8, **dadurch gekennzeichnet, dass** der Entschäumer (B) silikonbasiert ist.

10. Verfahren nach einem der Ansprüche 7 bis 9, **dadurch gekennzeichnet, dass** das Verhältnis zwischen thermoresponsiver Komponente (A) und Entschäumer (B) 1:0.001 bis 0.01:1 beträgt.

11. Verfahren nach einem der Ansprüche 7 bis 10, **dadurch gekennzeichnet, dass** es in einer Paste zur Herstellung von Elektroden enthalten ist.

12. Verfahren nach Anspruch 1, **dadurch gekennzeichnet, dass** die thermoresponsive Paste Feststoffpartikel, vorzugsweise Graphitpartikel und eine thermoresponsive Komponente enthält, wobei die thermoresponsive Komponente substituierte und/oder unsubstituierte Anhydroglucoseringe enthält.

13. Verfahren nach Anspruch 12, **dadurch gekennzeichnet, dass** die thermoresponsive Paste einen Entschäumer (B) enthält.

14. Verfahren nach Anspruch 12 oder 13, **dadurch gekennzeichnet, dass** die thermoresponsive Paste zur Herstellung von Elektroden verwendet wird.

15. Elektrode, **dadurch gekennzeichnet, dass** sie eine Beschichtung aus einer thermoresponsiven Paste (TR) aufweist, die gemäss einem Verfahren nach einem der Ansprüche 1 bis 4 hergestellt ist.

16. Elektrode nach Anspruch 15, **dadurch gekennzeichnet, dass** sie eine negative Elektrode ist und dass die thermoresponsive Paste vertikal ausgerichtete Graphitpartikel enthält.

## Claims

1. A method for producing a coating from a thermoresponsive paste, which contains solid particles and a thermoresponsive component, and the coating or layer being applied onto a carrier of an electrode, to be produced from the paste, solidified and dried, **characterized in that** less than 80% of a volatile solvent component is removed from the coating during the solidification.

2. The method according to Claim 1, **characterized in that** the paste contains components which are able to be influenced magnetically, in particular particles which are able to be influenced magnetically, preferably carbon particles which are able to be influenced magnetically, and particularly preferably graphite particles which are able to be influenced magnetically.

3. The method according to Claim 1 or 2, **characterized in that** the paste for layer formation is applied onto a component, solidified and dried.

4. The method for producing a thermoresponsive paste (TR) according to Claim 1, **characterized in that**, after an addition of an SBR binder, an additive which contains a thermoresponsive component is added to the paste.

5. A device for solidifying a coating, which contains a thermoresponsive component, in a continuous process according to a method according to one of Claims 1 to 4, wherein the device has a coating nozzle (010), **characterized in that** it comprises a paste solidifying arrangement (060) with at least one heating element (040) and a magnetic field arrangement (050), which is arranged downstream of the coating nozzle (010), and preceding a drier (020).

6. The device according to Claim 5, **characterized in that** the heating element (040) has a heatable blower, heatable rolls, IR radiant heaters, heating LEDs, induction heaters, devices for emitting microwaves or combinations thereof.

7. The method according to Claim 4, **characterized in that** the additive contains a thermoresponsive component (A) or that it contains a thermoresponsive component (A) and a defoamer (B).

8. The method according to Claim 7, **characterized in that** the thermoresponsive component (A) contains substituted and/or unsubstituted anhydroglucose rings.

9. The method according to Claim 7 and 8, **characterized in that** the defoamer (B) is silicone-based.

10. The method according to one of Claims 7 to 9, **characterized in that** the ratio between thermoresponsive component (A) and defoamer (B) is 1:0.001 to 0.01:1.

11. The method according to one of Claims 7 to 10, **characterized in that** it is contained in a paste for the production of electrodes.

12. The method according to Claim 1, **characterized in that** the thermoresponsive paste contains solid particles, preferably graphite particles, and a thermoresponsive component, wherein the thermoresponsive component contains substituted and/or unsubstituted anhydroglucose rings.

13. The method according to Claim 12, **characterized in that** the thermoresponsive paste contains a defoamer (B) .

14. The method according to Claim 12 or 13, **characterized in that** the thermoresponsive paste is used for the production of electrodes.

15. An electrode, **characterized in that** it has a coating of a thermoresponsive paste (TR), which is produced according to a method according to one of Claims 1 to 4.

16. The electrode according to Claim 15, **characterized in that** it is a negative electrode and that the thermoresponsive paste contains vertically aligned graphite particles.

## Revendications

1. Procédé, destiné à créer un revêtement en une pâte thermosensible, qui contient des particules solides et un composant thermosensible et le revêtement ou la couche étant appliqué(e) sur un support d'une électrode qui doit être créée à partir de la pâte, solidifié (e) et séché (e), **caractérisé en ce qu'**il est retiré du revêtement pendant la solidification moins de 80% d'un composant solvant volatil.

2. Procédé selon la revendication 1, **caractérisé en ce que** la pâte contient des composants magnétiquement influençables, notamment des particules magnétiquement influençables, de préférence des particules de carbone magnétiquement influençables et de manière particulièrement préférentielle, des particules de graphite magnétiquement influençables.

3. Procédé selon la revendication 1 ou 2, **caractérisé en ce que** pour créer la couche, l'on applique la pâte sur un composant, on la fait solidifier et sécher.

4. Procédé, destiné à créer une pâte thermosensible (TR) selon la revendication 1, **caractérisé en ce qu'**après lui avoir ajouté un agent liant SBR, l'on ajoute à la pâte un additif qui contient un composant thermosensible.

5. Dispositif, destiné à solidifier un revêtement qui contient un composant thermosensible dans un processus continu, conformément à un procédé selon l'une quelconque des revendications 1 à 4, le dispositif comportant une buse de revêtement (010), **caractérisé en ce qu'**il comprend un système de solidification de la pâte (060) doté d'au moins un élément chauffant (040) et d'un système de champ magnétique (050) qui est placé en aval de la buse de revêtement (010) et placé en amont d'un séchoir (020).

6. Dispositif selon la revendication 5, **caractérisé en ce que** l'élément chauffant (040) comporte une soufflante pouvant être chauffée, des rouleaux pouvant être chauffés, un chauffage rayonnant aux IR, des LED chauffants, un appareil de chauffage par induction, des dispositifs émetteurs de micro-ondes ou une association de ces derniers.

7. Procédé selon la revendication 4, **caractérisé en ce que** l'additif contient un composant thermosensible (A) ou **en ce qu'**il contient un composant thermosensible (A) et un agent antimousse (B).

8. Procédé selon la revendication 7, **caractérisé en ce que** le composant thermosensible (A) contient des cycles substitués et/ou non substitués d'anhydroglucose.

9. Procédé selon la revendication 7 et 8, **caractérisé en ce que** l'agent antimousse (B) est à base de silicone.

10. Procédé selon l'une quelconque des revendications 7 à 9, **caractérisé en ce que** le rapport entre le composant thermosensible (A) et l'agent antimousse (B) est de 1 : 0.001 à 0.01 : 1.

11. Procédé selon l'une quelconque des revendications 7 à 10, **caractérisé en ce qu'**il est contenu dans une pâte destinée à créer des électrodes.

12. Procédé selon la revendication 1, **caractérisé en ce que** la pâte thermosensible contient des particules solides, de préférence de particules de graphite et un composant thermosensible, le composant thermosensible contenant des cycles substitués et/ou non substitués d'anhydroglucose.

13. Procédé selon la revendication 12, **caractérisé en ce que** la pâte thermosensible contient un agent antimousse (B).

14. Procédé selon la revendication 12 ou 13, **caractérisé en ce que** l'on utilise la pâte thermosensible pour créer des électrodes.

15. Électrode, **caractérisée en ce qu'**elle comporte un revêtement en une pâte thermosensible (TR), qui est créé conformément à un procédé selon l'une quelconque des revendications 1 à 4.

16. Électrode selon la revendication 15, **caractérisée en ce qu'**il s'agit d'une électrode négative et **en ce que** la pâte thermosensible contient des particules de graphite orientées à la verticale.
